(19) Europäisches Patentamt
European Patent Office
Office européen des brevets

(11) **EP 2 474 591 A1**

(12) **EUROPEAN PATENT APPLICATION**

(43) Date of publication:
**11.07.2012 Bulletin 2012/28**

(51) Int Cl.:
*C10B 53/02* [(2006.01)]  *C10L 5/44* [(2006.01)]
*C05F 3/00* [(2006.01)]  *C05F 5/00* [(2006.01)]

(21) Application number: **11150450.2**

(22) Date of filing: **10.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **CSL Carbon Solutions Ltd**
**Helier**
**Jersey JE 4 9WG10 (GB)**

(72) Inventors:
• **Antonietti, Markus**
  **14558 Bergholz-Rehbrücke (DE)**
• **Kopetzki, Daniel**
  **1o623 Berlin (DE)**

(74) Representative: **HOFFMANN EITLE**
**Patent- und Rechtsanwälte**
**Arabellastraße 4**
**81925 München (DE)**

(54) **Synthesis of artificial humic matter by hydrothermal carbonization**

(57) The present invention relates to a hydrothermal carbonization (HTC) process for the preparation of a material, in particular a coal or humic substance, which comprises two steps, namely, a step of heating a reaction mixture comprising biomass, water and a base, and a step of adding further biomass to the reaction mixture and further heating the reaction mixture to give a reaction mixture comprising the material, to the material as such, and to various uses of the material. Furthermore, the present invention is concerned with a hydrothermal process for the disintegration of biomass to result in an aqueous dispersion, which comprises the step of heating a reaction mixture comprising biomass, water and a base, wherein the heating temperature is 300°C or less and the ratio B of base equivalents and biomass glucose equivalents is 0.3 < B < 2.0. Also, the invention provides the aqueous dispersion obtainable by the process and the use thereof as a cement additive.

**Description**

FIELD OF THE INVENTION

The present invention relates to a process for the preparation of a material, in particular a coal or humic substance, which comprises two steps, as well as a material obtainable by the process and the use of the material as a soil additive, such as soil conditioner for agriculture, ion binder or cement additive. According to another aspect, the present invention is concerned with a hydrothermal process for the disintegration of biomass to result in an aqueous dispersion, the aqueous dispersion obtainable by the process and the use thereof as a cement additive.

BACKGROUND OF THE INVENTION

Humic substances, which can also be termed humic matter, are of huge significance for the fertility and texture of soil in agriculture. Sustainable cultivation of land requires crop rotation, which preserves the carbon content of soil in a sustainable manner. Humic substances can be man-made and added to the soil. The production involves the extraction of brown coal with base rather than the synthesis thereof.

The hydrothermal carbonization of biomass goes back to Bergius, who in 1913 described the hydrothermal transformation of cellulose into coal-like materials. More systematic investigations of the hydrothermal carbonization were later performed among others by J. P. Schuhmacher et al. in Fuel 39 (1960), 223-234. Schuhmacher studied amongst many other parameters, the effect of pH on the reaction, e.g. by adding calcium oxide or sodium acetate to the reaction mixture. It was inferred that the pH has a very great effect on the character and the composition of the carbonization products. Specifically, an increase in alkalinity was seen as causing a sharp rise in the contents of hydrogen and volatile matter. The conclusion was drawn that the normal coalification in all probability has taken place in an acid medium.

Recently, the hydrothermal carbonization has seen a renaissance starting with M. Antonietti's, one of the present inventors', report in Max Planck Forschung 2/2006, 20-25. That report attracted great attention and triggered a large number of follow-up studies concerning the hydrothermal carbonization, for many of which patent applications were filed. Typical patent documents are the following:

WO 2009/127727, DE 10 2007 012 112 B3, EP 2 130 893 A2, WO 2008/095589, DE 10 2008 004 732 A1 (WO 2009/090072), DE 10 2007 022 840 A1 (WO 2008/138637), DE 10 2008 028 953 A1 and DE 10 2008 007 791 A1. All of these documents have in common that the hydrothermal carbonization is carried out either without catalysts or with acidic catalysts, such as citric acid. This is because under these conditions, the carbonization rate and carbon yield proved to be optimal.

The basic decomposition of wood to separate crystalline cellulose, hemicelluloses and lignin also belongs to the state of the art. The purpose of these methods practiced in the paper industry is to degrade cellulose in the least possible degree and to preserve it for paper production. In particular, any carbonization is to be avoided in the basic decomposition of wood in the paper industry.

The treatment with bases was also extended to biomass. For instance, H. Carrère et al. in Bioresource Technology 100 (2009) 3690-3694 describe thermo-chemical pre-treatments of pig manure to increase its conversion into biogas. For example, sodium hydroxide was added before thermal treatment. W. Hao et al. in Tsinghua Science and Technology 14 (2009) 378-382 study the effect of hydrothermal pre-treatment of sorted waste in a dilute alkali solution on the anaerobic digestion of the waste.

SUMMARY OF THE INVENTION

It has been surprisingly found by the present inventors that a two-step hydrothermal carbonization process, with the first step being carried out in the presence of base, can provide a man-made or artificial humic substance of multiple benefits. The humic substance can also be denoted as a preferably hydrophilic coal-like material. For the sake of brevity, the two-step process is also referred to as "preparation process of the invention", herein. The humic substance is useful for example as a soil additive in agriculture, as an ion binder or a cement additive.

Furthermore, it was found that biomass can be disintegrated in a one-step process under hydrothermal conditions when the heating temperature is 300°C or less and the amount of base equivalents with respect to the biomass glucose equivalents is within a certain range to give an aqueous dispersion of material, which is due to the large amount of organic acids therein highly hydrophilic. Owing to these properties, the aqueous dispersion is useful as a cement additive for improving flow and compaction. This process will also be termed "disintegration process of the invention", herein.

Specifically, according to Claim 1, the present application relates to a process for the preparation of a material ("preparation process") from biomass, which comprises the step (i) of heating a reaction mixture comprising biomass, water and a base; and a step (ii) of adding further biomass to the reaction mixture and further heating the reaction mixture to give a reaction mixture comprising the material, which preferably is a humic substance or a coal-like material.

Furthermore, the present invention according to Claim 11 is specifically concerned with a hydrothermal process for the disintegration of biomass ("disintegration process"), which comprises the step of heating a reaction mixture comprising biomass, water and a base to result in an aqueous dispersion, wherein the heating temperature is $\leq 300°C$ and the ratio B of base equivalents and biomass glucose equivalents is $0.3 < B < 2.0$.

Preferred embodiments are subject of the dependent claims.

DETAILED DESCRIPTION OF THE INVENTION

The preparation process of the invention can be termed a hydrothermal process, in particular a hydrothermal carbonization (HTC) process. This terminology is intended to show that the process involves the heating of a reaction mixture comprising water and will yield carbonized material. Preferably, the process is carried out under pressure. Accordingly, it can be conducted in a hydrothermal reactor.

The preparation process of the invention comprises two steps denoted (i) and (ii) in this application.

In step (i), a reaction mixture comprising biomass, water and a base is heated. Thereby, the sequence of adding the components to give the reaction mixture is not specifically limited. For instance, the base can be added to biomass and water to give the reaction mixture.

The term "biomass" as used herein is broadly understood as encompassing all kinds of plant and animal material and material derived from the same. According to a preferred embodiment, biomass as meant in the present application shall not include petroleum or petroleum derived compounds. Furthermore, the biomass for use in the processes of the present invention is preferably different from coal or coal-like materials.

The biomass for use in the present invention may comprise macromolecular compounds, examples of which are lignin and polysaccharides, such as starch, cellulose, and glycogen. As used herein, the term "cellulose" is intended to encompass hemicelluloses commonly also referred to as polyoses.

As will be appreciated, certain kinds of biomass may include both, plant and animal-derived material. As examples, manure (dung), night soil and sewage sludge can be mentioned. While the biomass for use in the present invention is preferably plant biomass, *i.e.* biomass of or derived from plants, certain contents of animal biomass (i.e. biomass of or derived from animals) may be present therein. For instance, the biomass may contain up to 30% of animal biomass.

According to a preferred embodiment, the biomass for use in the present invention is plant biomass, more preferably biomass containing more than 70 wt%, most preferably > 90 wt%, of polysaccharides and lignines in terms of the solid contents of the biomass.

For instance, the plant biomass may be agricultural plant material (*e.g.* agricultural wastes) or all kinds of wood material.

Without limitation, examples of biomass are crop, agricultural food and waste, feed crop residues, wood (such as wood flour, wood waste, scrap wood, sawdust, chips and discards), straw (including rice straw), grass, leaves, chaff, and bagasse. Furthermore, industrial and municipal wastes, including waste paper can be exemplified.

The term "biomass" as used herein also includes monosaccharides such as glucose, ribose, xylose, arabinose, mannose, galactose, sorbose, fucose and rhamnose, as well as oligosaccharides.

The biomass for use in the present invention is preferably raw biomass or raw biomass which has been further subjected to fermentation (also referred to as "fermented biomass") . As used herein "raw" biomass is intended to mean that the biomass for use in the process of the invention is native biomass, which may have been subjected to physical treatments such as mixing or combination steps, for instance grinding, chopping or sawing.

Raw biomass may, for instance, be the biomass obtained as waste (*e.g.* wood, agricultural, municipal waste) from the provider without further treatment, or as collected from natural sources. In the case of wood, the raw wood biomass may be wood collected from the forest (as the natural source), or sawdust from the wood processing industry. As meant herein, the fermentation of biomass refers to any conversion of the raw biomass caused by microorganisms under aerobic or anaerobic conditions. One example of fermented biomass is brewery waste.

The biomass can be used in the present invention in any form. Preferably, however, it is divided into an appropriate particle size prior to use, *e.g.* in the range of 0.1 to 20 mm, more preferably 0.3 to 10 mm, especially, 0.5 to 5 mm. Especially in the case of raw biomass, such comminution is done with particular benefit to enhance the reactivity of the starting biomass. Suitable particle sizes such as those exemplified above can be obtained by methods such as grinding, chopping or sawing.

The water being present in the reaction mixture of the first step may be water adhering or bound to the biomass, *e.g.* "raw" biomass as defined above. The water content of raw biomass may, for instance, be up to 80 wt%. As will be appreciated from the above, the raw biomass can be used as such and with water contents as mentioned above. Though drying is not excluded, *e.g.* in order to reduce the weight and consequently the transportation costs, the raw biomass to be subjected to the process of the invention is preferably not dried. Consequently, the present invention allows avoiding the energy-consuming drying of the biomass.

In addition to the water present in, *e.g.* bound to, the biomass, water may be added to the wet or dry biomass to adjust the water content in the reaction mixture of step (i). The total amount of water, *i.e.* the water bound to or contained in the as-obtained biomass and the additional water is not specifically limited. Preferably, the weight ratio of water to biomass (water/biomass) in the reaction mixture of the first step is in the range of 0.3 to 10. For the ease of transportability, especially in a continuous process, the solid contents of the reaction mixture to be subjected to the step (i) is preferably 5 to 35%, more preferably 10 to 30%, especially 15 to 25% by weight.

The reaction mixture comprising water and biomass to be subjected to heating in step (i) may comprise, without limitation, further ingredients as long as these do not inhibit the disintegration of the biomass a will be further detailed below.

While organic solvents, such as ketones, can be present in the reaction mixture, according to a preferred embodiment, the reaction mixture of step (i) contains water as a single solvent, with other solvents such as ethanol only incidentally brought in by the biomass, *e.g.* by fermentation. Consequently, preferably at least 95 wt%, more preferably at least 98 wt% of the solvent present in the reaction mixture of the first step is water.

The base to be added in step (i) is not particularly limited in kind. For instance NaOH, KOH, ammonia, CaO, $Ca(OH)_2$, $Mg(OH)_2$ and mixtures thereof can be used. When the product of the preparation process of the invention is to be used as a soil additive, in particular a soil conditioner for agriculture, it is preferred to use KOH, ammonia, lime (CaO or $Ca(OH)_2$) and/or magnesium lime as bases. This is because in the case of KOH and ammonia, the counter ions have a fertilizing effect, whereas lime and magnesium lime, owing to their physical-chemical properties, contribute to the soil conditioning effect of the product.

According to a preferred embodiment of the preparation process of the invention, the amount of base in terms of biomass present in step (i) is large. A suitable parameter for the amount of base with respect to biomass turned out to be the ratio of base equivalents and biomass glucose equivalents, abbreviated as B herein:

$$B = \frac{\text{base equivalents}}{\text{biomass glucose equivalents}}$$

In the above equation, the base equivalents in moles refer to the molar amount of OH- ions formally generated by the base. For instance, the base equivalent is 1 mol for 1 mol ammonia ($NH_3$) and it is 2 moles for 1 mol $Ca(OH)_2$ or CaO.

The biomass glucose equivalents as meant in the above definition of B refer to the molar amount of formal glucose units in the biomass. While the composition, and thus molecular weight, of biomass can vary largely, it turned out to be possible to treat biomass to be used in step (i) as if it consisted only of glucose. Accordingly, the biomass glucose equivalents (in moles) can be obtained by dividing the mass of dry biomass used in step (i) by the molecular weight of glucose, *i.e.* 180 g/mol. For the purpose of this calculation, the biomass is referred to as "dry" when no significant weight loss (*e.g.* of more than 0.5 wt%) occurs upon heating the biomass in a static system at 100°C under standard pressure.

The ratio B in step (i) of 0.3 < B < 2.0, preferably 0.5 < B < 1.5 proved to be particularly beneficial to obtain useful products. For ranges of B, as exemplified above, the base is acting as a reactant rather than a catalyst in step (i). As a rule, higher amounts of base with respect to biomass in step (i), in particular towards the upper sub-ranges of the above-defined preferred ranges of B, will result in more hydrophilic products.

The above ranges of B (0.3 < B < 2.0) can easily be converted to the preferred amount of base with respect to 1 kg dry biomass. For instance, the corresponding mass of KOH is 93.5 g to 623.4 g, for $Ca(OH)_2$ it is 61.7 g to 411.6 g, and for $NH_3$ it is 28.4 g to 198.2 g. Optimal products could be obtained for 200 g $Ca(OH)_2$ per kg dry biomass, and for 95 g ammonia per kg dry biomass.

Without being bound by theory, the base will disintegrate the biomass under the hydrothermal reaction conditions in step (i) into low molecular sugar fragments, whereby large amounts of organic acids, such as pyruvic acid, are generated in addition to carbonic acid. The reaction comes to a halt, when the base present in the reaction mixture in step (i), has been consumed. At this point, the reaction mixture exists, for instance, in the form of an aqueous dispersion, which is, owing to the organic acids, highly hydrophilic. No or only low amounts of coal-like products have formed at this stage.

To prevent the organic acids formed in step (i) from decarboxylating with an associated significant loss of hydrophilic properties of the dispersion, heating temperatures of 300°C or less are preferable in step (i).

In step (ii) of the preparation process of the invention, further biomass is added to the reaction mixture, and this is further heated to form the material, which is preferably a coal or humic substance. In step (ii) carbonization takes place and the organic acids generated in step (i), such as pyruvic acid, are incorporated in the material. As explained above, such organic acids will form in step (i) dependent on the amount of base added, with a concomitant consumption of the base. Accordingly, the pH of the reaction mixture will, due to the consumption of the base, become less alkaline and more acidic during step (i). According to a preferred embodiment, the addition of further biomass in step (ii) is initiated (in other words step (ii) started) when the base has been consumed in step (i). It will be understood that the amount of base with respect to biomass, i.e. the parameter B will determine the pH of the reaction mixture at the point when the base has been completely consumed.

From a process engineering point of view, the pH of the reaction mixture in step (i) is preferably neutral to slightly acidic, e. g. in the range of 5.5 to 8.0, especially in the range from 6.5 to 7.5, when the further biomass is added in step (ii). This is because in this case there is no need to neutralize the intermediate product, e.g. the dispersion, which can be used in step (ii), as is.

Accordingly, it is a preferred embodiment of the preparation process of the invention that the base is added in step (i) with respect to the biomass in such amounts that the pH of the reaction mixture at a stage when the base has completely reacted, lies in the range of 5.5 to 8.0, to which the further biomass is directly added, i.e. which is directly followed by step (ii) without any intermediate step.

In view of the above, the preparation process of the present invention can be run with a single set of reaction parameters, in particular temperatures, which preferably do not exceed 300°C. However, in terms of product control, it proved beneficial to carry out step (i) at lower temperatures than step (it). In particular, step (i) is preferably carried at comparably low temperatures such as in the range of 100 to 180°C, and the second step at higher temperatures, such as 180 to 230°C. Apart from an improved control of the product properties, such reaction temperatures in steps (i) and (ii) respectively, are advantageous in that they are less demanding in terms of the materials of the reactor to be used in step (i), which starts out under basic conditions.

The most suitable reaction temperature in step (i), in which the biomass is disintegrated, depends on the type of biomass. For instance, for soft biomass, such as residues of fermentation, reaction temperatures towards the lower end of the above range, *i.e.* at about 100°C may be sufficient, whereas higher temperatures, such as towards the upper end of the range, *e.g.* about 180°C, may be required for wood-like biomass.

According to a preferred embodiment, the concentration of biomass in the reaction mixture of step (i) is in the range of 10 to 50 wt%, preferably 20 to 40 wt%. This is because at biomass concentrations as high as this particularly high amounts of organic acids such as pyruvic acid can be incorporated in carbonisation step (ii) in the biomass. Also, as the reaction mixture obtained in step (i), which step can also be referred to as a basic decomposition step, usually has a low viscosity in the preparation process of the invention, such high biomass concentrations can be readily handled.

To ensure suitable concentrations of solids in the reaction mixture during step (ii), the reaction mixture can be concentrated between steps (i) and (ii). Especially when the pH of the reaction mixture is slightly acidic to neutral, *e.g.* in the range of 5.5 to 8.0, such concentrating of solids in the reaction mixture, which is then subjected to step (ii), can be implemented easily.

The present invention also relates to the material obtainable by the preparation process of the invention, which material can be referred to as a hydrophilic coal or humic substance (humic matter). In comparison to coal-like materials obtained in conventional HTC, and to other types of coal, the material is more hydrophilic and contains a higher amount of acidic organic groups. As neutralization indicates, the amount of acidic organic groups is directly related to the amount of base present in step (i). Owing to these properties, the material exhibits an improved water and ion binding capability so that it is highly suitable as a soil additive, such as a soil conditioner, and an ion binder. For the reasons given earlier, the material obtainable by the preparation process of the invention is particularly useful as a soil additive when KOH, ammonia, lime and/or magnesium lime are used as the base in step (i). Furthermore, the product of the preparation process of the present invention, owing to the high content of acid groups and also OH-groups, can be used with benefit in areas where synthetic carboxylate polymers or low-molecular organic acids are typically employed. This is the case, for instance, for cement additives for improving flow and compaction.

As will be appreciated, the disintegration process of the invention, by and large corresponds to step (i) of the preparation process of the invention. In addition, it is characterized in that the heating temperature is 300°C or less and that the ratio B is $0.3 < B < 2.0$. Otherwise, all preferred features and embodiments described above for step (i) of the preparation process of the invention will also be applicable to the disintegration process of the invention unless specifically stated. In the disintegration process of the invention, an aqueous dispersion is obtained, which comprises organic acids, such as pyruvic acid, and no or hardly any coal-like material. In particular, when the concentration of biomass in the reaction mixture to be heated at 300°C or below in the disintegration process is high such as in the range of 10 to 50 wt%, the aqueous dispersion obtained can be described as a supersaturated solution of organic salts which are however dispersed in solution due to the partly amphiphilic character of the products. In the disintegration process, the heating temperature is kept at 300°C or less so as to avoid any decarboxylation of the acids.

The present invention is also concerned with the aqueous dispersion obtainable by the disintegration process.

Owing to the large amount of acid groups, the aqueous dispersion can be used as such as a cement additive, *e.g.* for improving flow and compaction.

The present invention will be illustrated by way of examples, which of course must not be construed in a limiting sense.

EXAMPLES

Example 1

Under slight heating, 100 g of saccharose are dissolved in 200 ml of water and 20 g of $Ca(OH)_2$ are added. The solution is heated in an autoclave at 130°C for approximately 60 minutes. A brownish, cloudy dispersion having a pH-value of about 6, is formed. In a second step, a further 100 g of saccharose dissolved in 250 ml of water are added to this intermediate, followed by hydrothermal carbonization at 210°C for 3 h. The formed artificial humic substance has a black colour, contains dissolved and undissolved parts and can be directly used as an aqueous dispersion.

Example 2

400 g of cut grass (with residual moisture of about 75 wt%) are first mechanically homogenized and then treated with 30 ml of 25 wt% ammonia solution. The mixture is heated at 150°C for one hour, whereby a neutral primary hydrolysate of significantly lower viscosity will form. In a second step, the product is added with another 400 g of cut grass and is further carbonized at 185°C for 12 hours. Solid and liquid phase are separated by means of a suction filter. Approximately 80 g of a nitrogen-containing soil additive are obtained. The aqueous phase separated from the coal can be used for biogas production, or alternatively, it can be recycled to the reaction mixture after the first step.

Example 3

200 g of dried (oak) leaves are chaffed in a food processor, kneaded together with 100 ml of water and added with 100 g of KOH. The crude solid mixture is heated in a hydrothermal reactor at 180°C for two hours to be decomposed. A black, syrup-like, but pourable solution of the decomposed biomass, having a neutral pH-value, is formed, wherein the lignin contained in the leaves is dispersed as a residual material. The product is further treated at 230°C for 30 min and afterwards it can directly be used in the form of an aqueous dispersion as a cement additive.

**Claims**

1. A process for the preparation of a material from biomass, which comprises the following steps:

   (i) heating a reaction mixture comprising biomass, water and a base; and
   (ii) adding further biomass to the reaction mixture and further heating the reaction mixture to give a reaction mixture comprising the material.

2. The process of Claim 1, wherein the further biomass is added in step (ii), when the pH of the reaction mixture in step (i) lies in the range of 5.5 to 8.0.

3. The process of Claim 1 or 2, which is carried out at a temperature of $\leq$ 300°C.

4. The process of any one of Claims 1 to 3, wherein the temperature in step (ii) is higher than in step (i).

5. The process of Claim 4, wherein step (i) is carried out at a temperature in the range of 100 to 180°C and/or step (ii) at a temperature in the range of from above 180°C to 230°C.

6. The process of any one of Claims 1 to 5, wherein the base is selected from the group consisting of KOH, $NH_3$, CaO, $Ca(OH)_2$, $Mg(OH)_2$ or mixtures thereof.

7. The process of any one of Claims 1 to 6, wherein the ratio B of base equivalents and biomass glucose equivalents is 0.3 < B < 2.0 in step (i).

8. The process of any one of Claims 1 to 7, wherein the biomass concentration of the reaction mixture to be heated in step (i) is 10 - 50 wt%, preferably 20 - 40 wt%.

9. A material obtainable by a process as defined in any one of Claims 1 to 9, which is preferably a coal or humic substance.

10. A use of a material as defined in Claim 9 as a soil additive, ion binder or cement additive.

11. A hydrothermal process for the disintegration of biomass, which comprises the step of heating a reaction mixture comprising biomass, water and a base to result in an aqueous dispersion, **characterized in that** the heating temperature is ≤ 300°C and the ratio B of base equivalents and biomass glucose equivalents is 0.3 < B < 2.0.

12. The process of Claim 11, wherein the heating temperature is 100 - 180°C.

13. The process of Claim 11 or 12, wherein the further biomass is added in step (ii) when the pH of the reaction mixture in step (i) lies in the range of 5.5 to 8.0.

14. An aqueous dispersion obtainable by the process of any of Claims 11 to 13.

15. A use of an aqueous dispersion as defined in Claim 14 as a cement additive.

**EP 2 474 591 A1**

Europäisches Patentamt

European Patent Office

Office européen des brevets

## PARTIAL EUROPEAN SEARCH REPORT

under Rule 62a and/or 63 of the European Patent Convention.
This report shall be considered, for the purposes of
subsequent proceedings, as the European search report

Application Number

EP 11 15 0450

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/046538 A2 (UPM KYMMENE CORP [FI]; AHLBECK JARL [FI]; LUNDQVIST KURT [FI]; ROENNLU) 29 April 2010 (2010-04-29) <br> * claims 1-19; figure 1 * <br> * page 11, lines 15-32 * <br> * page 8, lines 12-27 * <br> ----- | 1-10 | INV. <br> C10B53/02 <br> C10L5/44 <br> C05F3/00 <br> C05F5/00 |
| X | US 2006/260186 A1 (IVERSEN STEEN B [DK] ET AL BRUMMERSTEDT IVERSEN STEEN [DK] ET AL) 23 November 2006 (2006-11-23) <br> * paragraphs [0038], [0045], [0046], [0070] - [0075], [0085] - [0086], [0168] - [0172]; claims; figures; example 1 * <br> ----- | 1-10 | |
| X | US 2010/287823 A1 (MISRA MANORANJAN [US] ET AL) 18 November 2010 (2010-11-18) <br> * paragraphs [0050] - [0052], [0064], [0079] - [0083]; example 2 * <br> ----- | 1-10 | |
| X | WO 2008/009643 A2 (BIOECON INT HOLDING NV [NL]; O'CONNOR PAUL [NL]; STAMIRES DENNIS [US]) 24 January 2008 (2008-01-24) <br> * paragraphs [0017], [0034] - [0040]; claims 1-32 * <br> ----- <br> -/-- | 1-10 | TECHNICAL FIELDS SEARCHED (IPC) <br><br> C10B <br> C10L <br> C05F |

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 9 September 2011 | Bertin, Séverine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

Europäisches
Patentamt

European
Patent Office

Office européen
des brevets

**PARTIAL EUROPEAN SEARCH REPORT**

Application Number

EP 11 15 0450

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | EP 2 166 061 A1 (ARTES BIOTECHNOLOGY GMBH [DE]) 24 March 2010 (2010-03-24) * abstract; claims; figures * ----- | 1-10 | |
| | | | TECHNICAL FIELDS SEARCHED (IPC) |

EPO FORM 1503 03.82 (P04C10)

Europäisches
Patentamt
European
Patent Office
Office européen
des brevets

**INCOMPLETE SEARCH
SHEET C**

Application Number

EP 11 15 0450

Claim(s) completely searchable:
        1-10

Claim(s) not searched:
        11-15

Reason for the limitation of the search (non-patentable invention(s)):

As indicated in the previously sent invitation pursuant Rule 62a(1) EPC, claims 1 and 11 have been drafted as separate independent process claims. Under Article 84 in combination with Rule 43(2) EPC, an application may contain more than one independent claim in a particular category only if the subject-matter claimed falls within one or more of the exceptional situations set out in paragraph (a), (b) or (c) of Rule 43(2) EPC. This is not the case in the present application, however, they appear to relate effectively to the same subject-matter and to differ from each other only with regard to the definition of the subject-matter for which protection is sought and/or in respect of the terminology used for the features of that subject-matter.
The search has been restricted to the subject-matter indicated by the applicant in his letter of 01.09.2011 filed in reply to the invitation pursuant to Rule 62a(1) EPC, i.e. claims 1-10.

**ANNEX TO THE EUROPEAN SEARCH REPORT
ON EUROPEAN PATENT APPLICATION NO.**                    EP 11 15 0450

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2011

| Patent document cited in search report | | Publication date | Patent family member(s) | | Publication date |
|---|---|---|---|---|---|
| WO 2010046538 | A2 | 29-04-2010 | NONE | | |
| US 2006260186 | A1 | 23-11-2006 | NONE | | |
| US 2010287823 | A1 | 18-11-2010 | WO 2009015358 | A2 | 29-01-2009 |
| WO 2008009643 | A2 | 24-01-2008 | CA 2657879 | A1 | 24-01-2008 |
| | | | CN 101511971 | A | 19-08-2009 |
| | | | EP 2054488 | A2 | 06-05-2009 |
| | | | JP 2009543925 | A | 10-12-2009 |
| | | | KR 20090051046 | A | 20-05-2009 |
| | | | RU 2009105252 | A | 27-08-2010 |
| | | | US 2010209965 | A1 | 19-08-2010 |
| EP 2166061 | A1 | 24-03-2010 | DE 102008047883 | A1 | 01-07-2010 |

For more details about this annex : see Official Journal of the European Patent Office, No. 12/82

## REFERENCES CITED IN THE DESCRIPTION

**Patent documents cited in the description**

- WO 2009127727 A
- DE 102007012112 B3
- EP 2130893 A2
- WO 2008095589 A
- DE 102008004732 A1
- WO 2009090072 A
- DE 102007022840 A1
- WO 2008138637 A
- DE 102008028953 A1
- DE 102008007791 A1

**Non-patent literature cited in the description**

- **J. P. SCHUHMACHER et al.** *Fuel,* 1960, vol. 39, 223-234
- **H. CARRÈRE et al.** *Bioresource Technology,* 2009, vol. 100, 3690-3694
- **W. HAO et al.** *Tsinghua Science and Technology,* 2009, vol. 14, 378-382